# EUROPEAN PATENT APPLICATION

(11) **EP 0 633 405 A1**
(43) Date of publication of application: **11.01.1995**
(21) Application number: 94108702.5
(22) Date of filing: 07.06.1994
(51) Int. Cl.: F16C 11/06

(54) **A method for manufacturing a ball coupling element**

(30) Priority: 08.06.1993 IT BO930265
(71) Applicant: CHIAVETTE UNIFICATE S.p.A., I-40069 Zola Predosa (IT)
(72) Inventor: Triolo, Innocenzo, I-40033 Casalecchio di Reno (IT); Salerno, Claudio, I-40133 Bologna (IT); Caradonna, Carlo, I-40059 Medicina (IT)
(74) Representative: Jorio, Paolo

(57) **Abstract**

A method for the manufacture of a ball coupling element (1) according to which a ball head (6) is inserted into a bush (12) of anti-friction material having first and second portions (14,15) , the first portion (14) having a spherical inner seat (17) for partially housing the ball head (6) and being defined externally by a cylindrical surface (16), the second portion (15) being defined internally by a substantially cylindrical surface (18) and varying in thickness; the second portion (15) is permanently deformed so that its inner surface (18) retains the ball head (6) and is calibrated so as to obtain a portion (15a) defined externally by a cylindrical surface (27) and having a diameter equal to that of the first portion (14), before force fitting the deformed bush (12) into a seat (4) in a body (2) of the element (1).

## Description

The present invention relates to a method for manufacturing a ball coupling element.

The invention relates in particular to a method for manufacturing a ball coupling element of the type which includes a body for connecting to an associated control rod and having a cylindrical seat, and a ball head adapted to be connected to a further rod and coupled to the body by means of an interposed bush made of anti-friction material which positively engages the seat itself.

In known coupling elements of the type described above, the head is fitted to the body by first assembling the ball head and the bush and then inserting this assembly into the seat in the body.

Normally, the ball head-bush assembly is made by inserting the ball head into a cylindrical bush, preferably manufactured by sintering, with an inner diameter which is slightly larger than the diameter of the ball head. Next, a swelling operation is carried out on the bush, whereby compression is exerted on the bush until it is permanently deformed so as to form an inner, spherical seat which rotatably engages the head. At the end of the swelling operation, as the outer surface of the bush is now convex as a result of compression, it is essential to carry out an operation, normally turning, to return the bush to its original geometry and adapt its outer diameter to the diameter of the seat in the aforesaid body.

However, the manufacturing process described involves relatively long production times and high manufacturing costs, owing to the fact that the bush must be restored to its cylindrical shape after swelling and to the fact that part of the material constituting the bush is wasted during this operation in returning it to a cylindrical form.

The object of the present invention is to provide a method for the manufacture of a ball coupling element which overcomes the aforesaid disadvantages simply and economically.

The present invention provides a method for the manufacture of a ball coupling element, this method being characterised in that it includes the steps of manufacturing a bush which is symmetrical about an axis and includes first and second coaxial portions, the first portion having a concave inner surface which is concave towards the second portion, and the second portion varying in thickness along the said axis and being defined by a substantially cylindrical inner surface; inserting into the bush a ball head with a diameter slightly smaller than an inner diameter of the said second portion; and permanently deforming the said second portion so as to make the inner surface of this second portion enclose the said ball head.

The method described above preferably includes a step of calibrating the said second portion during its permanent deformation.

Again, in the method described above, the said first portion is formed with a cylindrical first outer surface and, preferably, during the permanent deformation of the said second portion, this portion is deformed so as to form a further portion which is defined externally by a second cylindrical surface coaxial with the said first surface and having an outer diameter equal to the outer diameter of the said first portion.

The invention will now be described with reference to the appended drawings, which illustrate one non-limitative embodiment thereof, and in which:
Figure 1 is a perspective view of a preferred embodiment of a ball coupling element made according to the method of the present invention;
Figure 2 shows, in section, a detail of the ball join element of Figure 1;
Figure 3 shows, in section, the two elements constituting the detail of Figure 2;
Figure 4 shows the two elements of Figure 3 partly coupled, and a mould for forming the detail of Figure 2; and
Figure 5 shows an intermediate step in forming the detail of Figure 2.

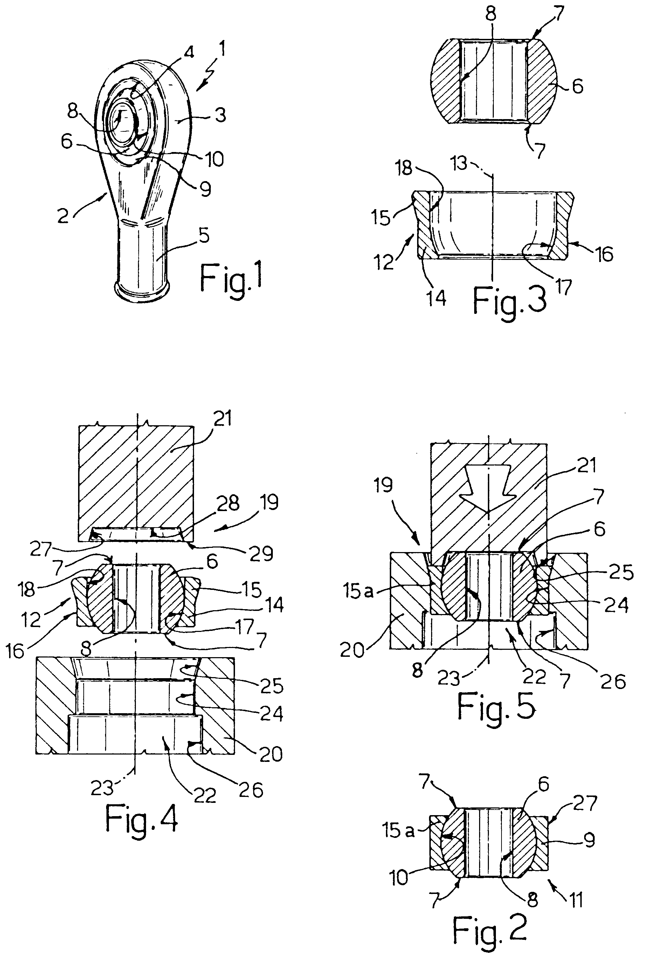

In Figure 1, a metal ball coupling element 1 includes a body 2, which includes in turn a head 3 with a cylindrical through-seat 4, and a shank 5 with a threaded hole (not shown) for positive engagement by a threaded end portion of a control rod (not shown).

The element 1 also includes a ball head 6 having two parallel diametrically opposite flat surfaces bands of the head 6 itself and a central through-hole 8 extending perpendicular to the faces 7 for positive engagement by a pin (not shown) of a further control rod (not shown). The head 6 rotatably engages the seat 4 in the body 2 by means of an interposed cylindrical bush 9 of anti-friction material having a spherical inner seat 10 which is complementary to the shape of the head 6, is provided to house the head 6 rotatably and has an outer diameter which is slightly larger than the diameter of the seat 4.

The element 1 is obtained by first forming a ball head-bush assembly, indicated 11 and illustrated in Figure 2, and then fitting this assembly 11 to the head 3 of the body 2.

With reference to Figures 3, 4, and 5, the assembly 11 is formed by a bush 12 which is made by sintering, is symmetrical about an axis 13 and includes two coaxial portions 14 and 15, the portion 14 being defined externally by a cylindrical surface 16 and having an outer diameter which is slightly larger than the diameter of the seat 4. The portion 14 is defined internally by a spherical surface 17, with its concavity facing the portion 15 and a shape complementary to that of the head 6. The portion 15, on the other hand, is defined internally by a substantially cylindrical surface 18, coaxial with the axis 13, and has an inner diameter which is slightly larger than that of the head 6 and a thickness which increases from the portion 14 towards a free end of the portion 15 itself.

As is shown in Figures 4 and 5, the head 6 is coupled to the bush 12 by a forming assembly 19 which includes a die 20 and a punch 21. The die 20 has a forming channel 22 symmetrical about an axis 23 and including an intermediate, cylindrical calibrating part 24, the diameter of which is equal to the outer diameter of the portion 14, a conical inlet part 25 the diameter of which decreases towards the part 24, and a cylindrical outlet part 26, the diameter of which is larger than that of the portion 24.

The punch 21 has one end fixed, in a known manner which is not shown, to a linear actuator (not shown) operable to move the punch 21 along the axis 23, and has an outer diameter which is slightly smaller than the diameter of the part 24. At the end opposite that fixed to the actuator (not shown), the punch 21 has an outwardly-flared frontal cavity 27 (Figure 4), defined axially by a flat surface 28 perpendicular to the axis of the punch 21 and parallel to a frontal, annular surface 29 of the punch 21 itself, and having a diameter, measured at the surface 29, which is substantially equal to the inner diameter of the portion 15.

The assembly 11 is formed by first inserting the head 6 into the bush 12 until it is against the surface 17, next, the bush 12 is arranged coaxially of the axis 23, with its portion 14 facing the die 20, and is inserted into the channel 22 through the part 25 and advanced along the axis 23 until the portions 14 and 15 engage the parts 25 and 24 respectively.

At this point, the actuator (not shown) is activated and first advances the punch 21 until its surface 28 is in contact with one of the faces 7 of the head 6 projecting out of the bush 12 and the die 20 so as to retain the head 6 in contact with the surface 17 and the surface 29 in contact with a free frontal surface of the portion 15. The punch 21 is then advanced further and the bush 12 is pressed through the channel 22 causing a gradual deformation of the portion 15 through the part 25 and a gradual enclosing of the head 6 by the surface 18. While passing through the channel 22, the bush 12 progressively engages the part 24 in which it is calibrated and, in particular, the portion 15 is turned into a cylindrical portion 15a, defined externally by a cylindrical surface 27, coaxial with and aligned with the surface 16 and having a diameter equal to the outer diameter of the portion 14 and slightly larger than the diameter of the seat 4. On leaving the part 24, the assembly 11 is now complete and passes through the part 26 without further alteration to its dimensions, it is then withdrawn and introduced, in a known manner, not illustrated, into the seat 4 in the body 2.

It is clear from the above that the particular geometry of the bush 12 and the easy operations involved in forming the assembly 11 enable the production costs of the element 1 to be considerably reduced, since the assembly 11 itself is produced in a single operation which can be carried out in a forming assembly which is itself both simple to assemble and very inexpensive, and is produced, moreover, without any waste of material as no further working is required after the forming assembly.

## Claims

1. A method for manufacturing a ball coupling element (1), this method being characterised in that it includes the steps of forming a bush (12) which is symmetrical about an axis (13) and includes coaxial first (14) and second (15) portions, the first portion (14) having a concave inner surface (17) facing the second portion (15), and the second portion (15) varying in thickness along the said axis (13) and being defined by a substantially cylindrical inner surface (18); inserting into the bush (12) a ball head (6) with a diameter slightly smaller than an inner diameter of the said second portion (15); and permanently deforming the said second portion (15) such that its inner surface (18) encloses the said ball head (6).

2. A method according to Claim 1, characterised in that it includes the step of calibrating the said second portion (15) during the permanent deformation thereof.

3. A method according to Claim 1 or Claim 2, characterised in that the first portion (14) is formed with a first cylindrical outer surface (16), and in that during its permanent deformation the said second portion (15) is deformed so as to obtain a portion (15a) which is defined externally by a second cylindrical surface (27), coaxial to the said first surface (16), and the outer diameter of which is the same as the outer diameter of the said first portion (14).

4. A method according to any preceding Claim, characterised in that the inner surface (17) of the said first portion (14) has a spherical shape complementary to that of the ball head (6).

5. A method according to any preceding Claim, characterised in that it includes the step of moving the said ball head (6) into contact with the inner surface (17) of the first portion (14) and maintaining the ball head (6) in contact with the inner surface (17) of the first portion (14) during the permanent deformation of the second portion (15).

6. A method according to Claim 5, characterised in that the permanent deformation of the said second portion (15) is obtained by moving the bush (12), with the ball head (6) within it, in contact with the inner surface (17) of the said first portion (14) through a forming assembly (19); this forming assembly (19) having a forming channel (22) with at least one cylindrical calibrating part (24).

7. A method according to Claims 3 and 6, characterised in that the diameter of the said calibrating part (24) is substantially equal to the outer diameter of the said first portion (14).

8. A method according to any preceding Claim, characterised in that the said second portion (15) increases in thickness along its axis (13) from the said first portion (14).

9. A method according to any preceding Claim, characterised in that the said bush (12) is made by sintering.
